# EUROPEAN PATENT SPECIFICATION

(11) **EP 1 385 736 B1**
(45) Date of publication and mention of the grant of the patent: **24.06.2009**
(21) Application number: 02717690.8
(22) Date of filing: 19.03.2002
(51) Int. Cl.: B62K 13/00

(54) **AUTOMATIC BICYCLE STEERING LOCK**
AUTOMATISCHES FAHRRADLENKSCHLOSS
SERRURE DE BLOCAGE AUTOMATIQUE POUR BICYCLETTE

(30) Priority: 26.03.2001 US 278878 P
(43) Date of publication of application: 04.02.2004
(73) Proprietor: Scott, Nelson Edward, Bradenton Beach, FL 34217 (US)
(72) Inventor: Scott, Nelson Edward, Bradenton Beach, FL 34217 (US)
(74) Representative: Fritsche, Rainer
(86) International application number: PCT/US2002/008738
(87) International publication number: WO 2002/076814

(56) References cited:
- WO-A2-98/40267
- DE-A1- 4 244 206
- DE-A1- 19 531 503
- DE-U1- 9 419 256
- US-A- 667 154
- US-A- 5 039 120
- US-A- 5 749 592
- US-A- 5 842 710
- US-A- 6 036 215
- US-A- 6 155 582
- US-B1- 6 270 100
- US-B1- 6 286 847

## Description

### TECHNICAL FIELD

This invention relates to a steering lock for attaching two bicycles to one another during use, and a method for its use, which can be used with a bicycle tow bar to rapidly and securely attach a child's bicycle behind the larger bicycle of an adult for tandem travel. In its towed position, the front wheel of the child's bicycle is preferably elevated and unable to engage the ground, thus allowing the adult rider to retain steering control while the child chooses to pedal or coast. One end of the bicycle tow bar is connected to the adult bicycle, with the coupler member of the steering lock being attached to the opposing distal end of the tow bar. The steering lock of the present invention also comprises a receiver member that is attachable to the head tube of the child's bicycle. Thus, when the coupler member becomes engaged with the receiver member, while the front wheel of the child's bicycle is also in the longitudinally directed position required to align holes in the front surfaces of the head tube, the steering fork tube, and the handlebar stem tube of the child's bicycle, the coupler member is able to promptly and fully force the distal end of a steering lock pin in the receiver member through the aligned holes to secure the steering lock pin and aligned holes in fixed relation. Although not required to achieve connection therebetween , a quick-release safety pin can be used to further secure the coupler member and the receiver member to one another during tandem travel. Consequently, the present invention allows the child's bicycle to be operated as an independent unit, and when a child cycling with an adult becomes tired, the child's bicycle can be expediently attached to the adult bicycle for safe tandem use, without tools or the removal of bicycle parts, and promptly disconnected thereafter, with minimal effort, to restore the child's bicycle into its independently operable condition whenever the child again wants to cycle alone, with such conversion being easily carried out multiple times on the same ride, if needed.

### BACKGROUND ART

Cycling is a great exercise and a terrific family sport. Infant seats have been developed for adult bicycles, so that young children unable to operate a bicycle of their own can ride comfortably with an adult. However, problems occur with older children, typically ages 4-7, who want the independence of riding their own bicycle, yet do not possess the stamina and endurance to travel as far or as fast as an accompanying adult. To solve this problem, bicycle tow bars have been developed that attach a child's bicycle in tandem behind an adult bicycle. Document WO 98/40267 discloses a steering lock and a method according to the preamble of claims 1 and 15, respectively. The steering lock of the present invention improves the means of connection between the distal end of a bicycle tow bar and a child's bicycle by providing a connection that is accomplished in a quick and efficient step, with fewer parts, a simplified connection, and a more solid locking system during travel. Therefore, as a result of using the present invention, connection and disconnection of the child's bicycle can be efficiently accomplished multiple times on the same ride. In the towed position, the front wheel of the child's bicycle is slightly elevated and unable to engage the ground, so that the adult rider retains steering control. Also, the child can optionally pedal or coast while being towed.

### DISCLOSURE OF INVENTION

The primary object of this invention is to provide a solid connection between the distal end of a bicycle tow bar and the head tube of a child's bicycle, while also preventing rotation of the steering fork tube and the handlebar stem tube on the child's bicycle during tandem travel. It is a further object of this invention to provide a means of connection between the distal end of a bicycle tow bar and the head tube of a child's bicycle that can be accomplished in one quick, efficient connection step, requires no hand tools, and does not involve the removal of any parts from either bicycle. It is also an object of this invention to provide a means of connection between the distal end of a bicycle tow bar and the head tube of a child's bicycle that is simple in construction for cost-effective manufacture and ease of use. A further object of this invention is to provide a means of connection between the distal end of a bicycle tow bar and the head tube of a child's bicycle that is made from durable materials for long-lasting use. It is also an object of this invention to provide a means of connection between the distal end of a bicycle tow bar and the head tube of a child's bicycle that is adaptable to installation during manufacture of the child's bicycle, as well as after-market installation.

As described herein, properly manufactured and installed, the steering lock of the present invention would enable quick and easy connection of a child's bicycle in tandem behind an adult bicycle with a bicycle tow bar, at anytime a child riding with an adult becomes tired and no longer is able to keep pace with the adult. A receiver member with a depressible steering lock pin is either attached to, or molded into so as to be an integral part thereof, the head tube of the child's bicycle. An optional receiver ear and an optional safety pin hole in the receiver member can also assist in providing a fast and solid connection between the receiver member and a coupler member with corresponding features. Thus, when the bottom portions of the coupler and receiver members each have at least one comparably positioned ear, the ears are in contact with one another, and the front surface of the steering fork tube on the child's bicycle is also in the forward position required to orient its front wheel longitudinally and align correlating holes in the front surfaces of the head tube, the steering fork tube, and the handlebar stem tube of the child's bicycle, a simple forward tilting of the upper portion of the coupler member toward the receiver member while using the joined ears as a pivot point, until the coupler member is in full contact with the receiver member and any safety pin holes become aligned, forces the locking pin in the receiver member to become inserted into the correlating holes and maintain the locking pin and the correlating holes in fixed relation to one another until the steering lock pin is withdrawn. If safety pin holes are used, a quick-release safety pin can then be inserted through the aligned safety pin holes to further secure the receiver and coupler members in a fixed position relative to one another during tandem travel of the adult and child bicycles. Thus, the present invention is easy to use, with connection between the distal end of a bicycle tow bar and the head tube of a child's bicycle being accomplished in a quick and efficient connection step. When no ears are used, the steps of aligning the coupler and receiver members and fully inserting the locking pin within the correlating holes can still be promptly accomplished. Once connection between the coupler member and the receiver member is made, further rotation of the head tube, steering fork tube and handlebar stem tube on the child's bicycle relative to one another is prevented, with the front wheel of the child's bicycle being slightly elevated and unable to engage the ground so that the adult rider retains steering control. The child can optionally pedal or coast while being towed. Further, no hand tools are required to make or separate the connection between the adult and child bicycles, and no parts are removed from either the adult of child's bicycle during disconnection. Removal of the bicycle tow bar from the child's bicycle requires only the withdrawal of the quick-release safety pin from the safety pin holes in the coupler and receiver members, when used, followed by prompt lifting away of the coupler member from the receiver member. Since the connection between an adult bicycle and a child's bicycle can be rapidly made and promptly terminated, the child's bicycle can be repeatedly towed by the adult bicycle and restored to independent use multiple times during travel. It is contemplated for the preferred embodiment of the present invention to be made from high-strength steel for strong, durable construction. The simple design of the present invention, its few parts, as well as the configuration of the receiver and coupler members, also enhance durability and cost-effective manufacture of the present invention. The receiver member is also simple in design, having a configuration that allows alternative means of attachment to a child's bicycle, either as a result of being formed as an integral part of head tube construction, connected to the head tube during manufacture, or after market connection to the head tube of a previously constructed child's bicycle.

The description herein provides the preferred embodiments of the present invention but should not be construed as limiting the scope of the steering lock of the present invention. For example, variations in the length, width, and thickness dimensions of the coupler and receiver members; the diameter dimension of any safety pin holes used; the use of receiver and coupler ears, and the size and configuration of any receiver and coupler ears used; the length and diameter dimension of the locking pin; the material from which the return spring associated with the locking pin is made; and the configuration of any quick-release safety pin used; other than those shown and described herein may be incorporated into the present invention as described in the claims. Thus the scope of the present invention should be determined by the appended claims, rather than being limited to the examples given.

### BRIEF DESCRIPTION OF DRAWINGS

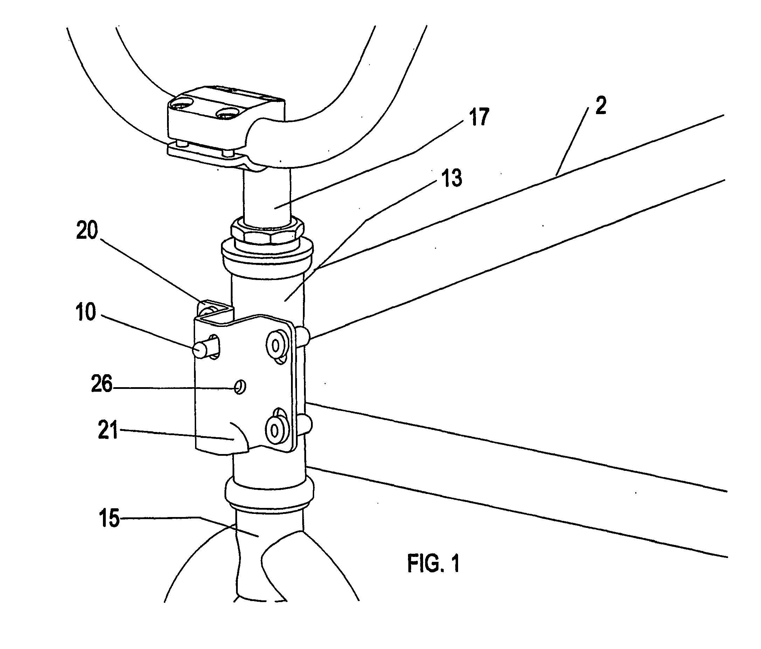

Fig. 1 is a perspective view of the receiver member in a first preferred embodiment of the present invention attached to the head tube of a child's bicycle, the receiver member having an exposed front surface and a steering lock pin, and being in an unlocked position with one end of its steering lock pin extending beyond its exposed front surface.

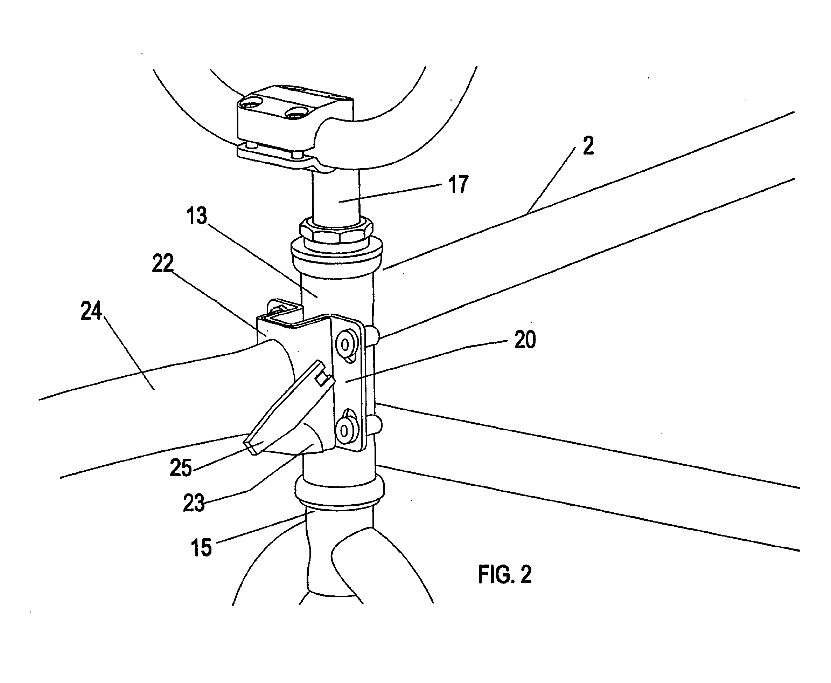

Fig. 2 is a perspective view of the first preferred embodiment with the receiver member attached to the head tube of a child's bicycle, a coupler member depending from the distal end of a bicycle tow bar being attached to the receiver member so as to fully engage its steering lock pin, and a quick-release safety pin securing the coupler member in a fixed position against the receiver member.

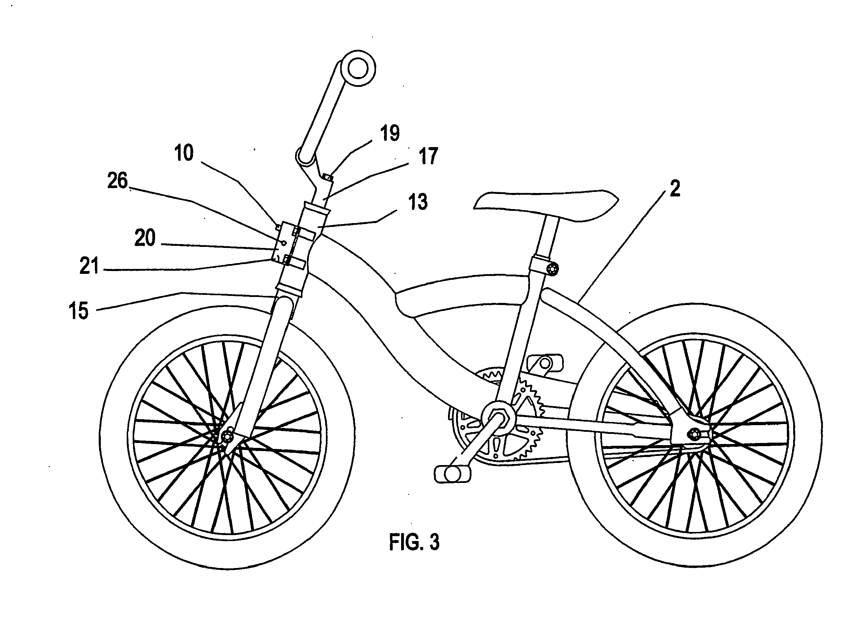

Fig. 3 is a right side view of a child's bicycle outfitted with the receiver member of the first preferred embodiment of the present invention.

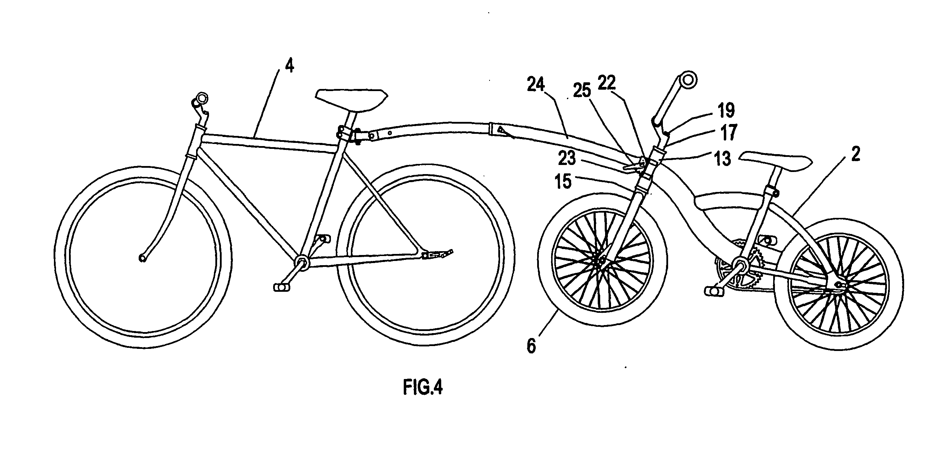

Fig. 4 is a right side view of the first preferred embodiment being used to tow a child's bicycle in tandem behind an adult bicycle, with the front wheel of the child's bicycle being slightly raised and a quick-release safety pin secured in its operational position.

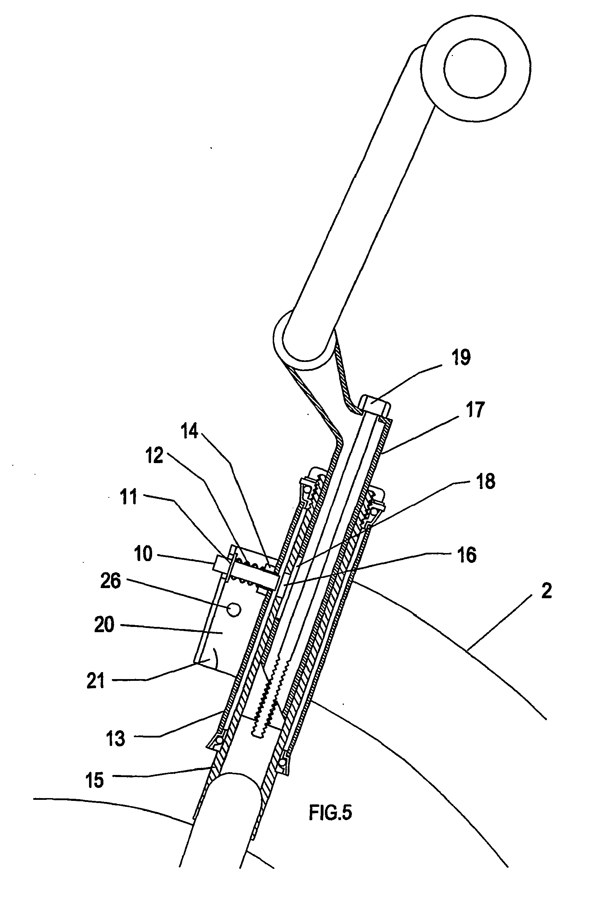

Fig. 5 is a cross-sectional side view of the receiver member in the first preferred embodiment attached to the head tube of a child's bicycle, with one end of its steering lock pin extending beyond the exposed front surface of the receiver member in an unlocked position.

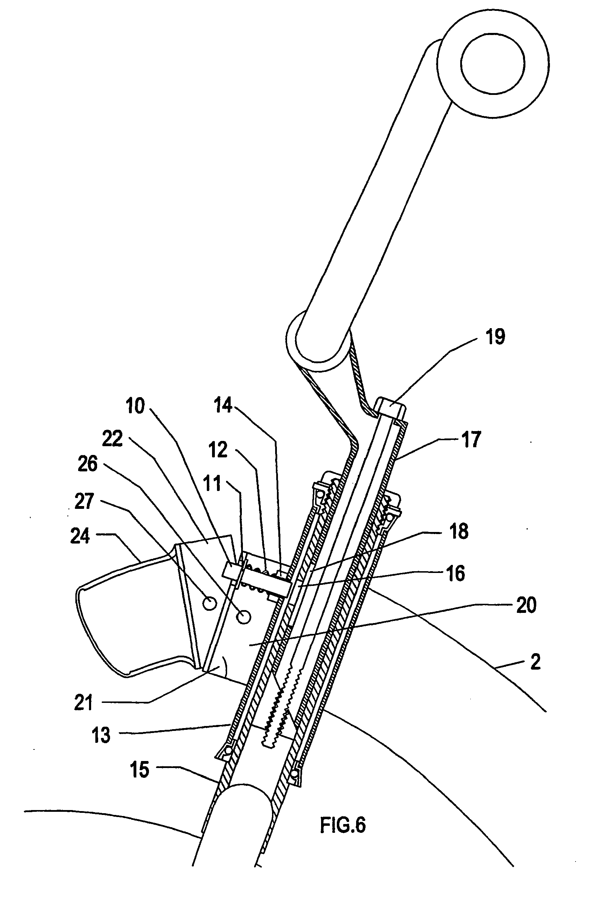

Fig. 6 is a cross-sectional side view of the receiver member in the first preferred embodiment of the present invention attached to the head tube of a child's bicycle and a coupler member partially engaged with the receiver member, with the ears of the coupler and receiver members being aligned prior to engagement of the steering lock pin.

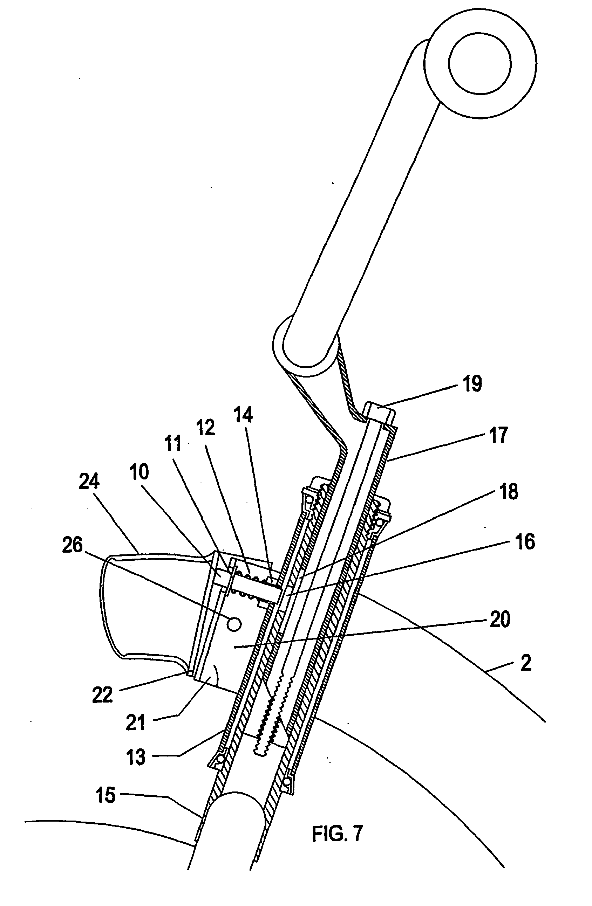

Fig. 7 is a cross-sectional side view of the receiver member in the first preferred embodiment attached to the head tube of a child's bicycle and a coupler member close to its position of full engagement with the receiver member, with the ears of the coupler and receiver members being aligned and the coupler member ready to engage the steering lock pin on the receiver member.

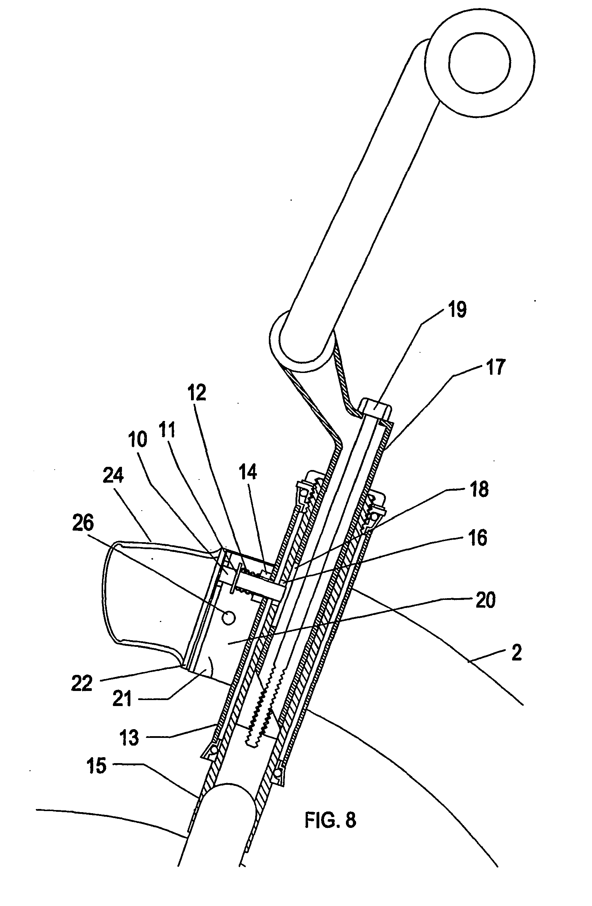

Fig. 8 is a cross-sectional side view of the receiver member in the first preferred embodiment attached to the head tube of a child's bicycle and a coupler member engaged with the receiver member, with the ears of the coupler and receiver members aligned and the coupler member fully engaging the steering lock pin.

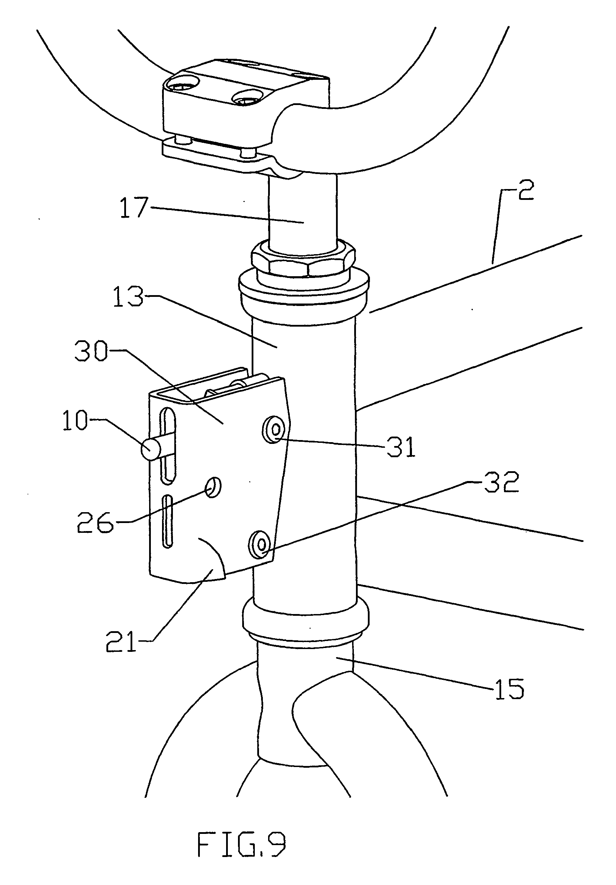

Fig. 9 is a perspective view of a second preferred embodiment of the present invention having a pivot receiver attached to the head tube of a child's bicycle, the front surface of the pivot receiver aligned substantially parallel with the front surface of the head tube, one end of a steering lock pin extending through an elongated vertically-extending aperture through the front surface of the pivot receiver, and the pivot receiver being secured to the head tube by a fixed pivot bolt and a slide pivot bolt.

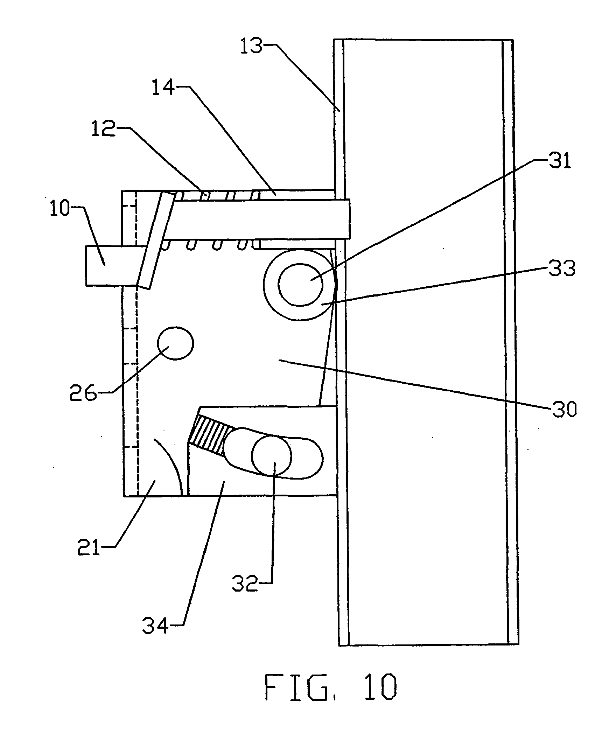

Fig. 10 is a cross-sectional side view of the second preferred embodiment with the front surface of the pivot receiver in a position substantially parallel to the front surface of the head tube of the child's bicycle, one end of a steering lock pin extending through the front surface of the pivot receiver with the opposing end of the steering lock pin poised for extension into the head tube, the pivot receiver being held in place against the head tube by a fixed pivot bolt and a slide pivot bolt.

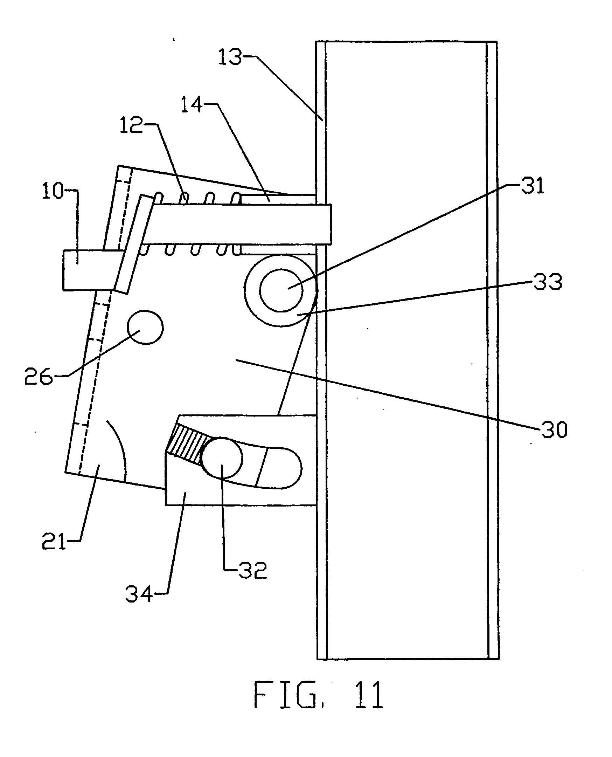

Fig. 11 is a cross-sectional side view of the second preferred embodiment of the present invention with the front surface of the pivot receiver attached to the head tube of a child's bicycle in a non-parallel, up position.

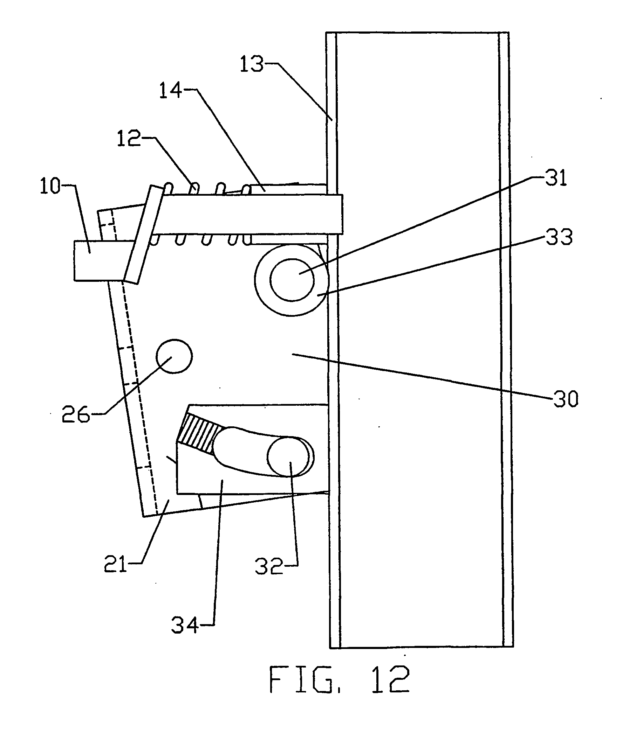

Fig. 12 is a cross-sectional side view of the second preferred embodiment of the present invention with the front surface of the pivot receiver attached to the head tube of a child's bicycle in a non-parallel, down position.

### BEST MODES FOR CARRYING OUT THE INVENTION

The present invention comprises a receiver component, such as receiver member 20 or a pivot receiver 30, attached to the head tube 13 of a child's bicycle 2 and a coupler member 22 that depends from the distal end of a bicycle tow bar 24 connected to a larger adult bicycle 4, so that when coupler member 22 is fully joined to receiver member 20 or pivot receiver 30, the adult bicycle 4 can safely tow the child's bicycle 2. In its attached tandem position, the front wheel 6 of the child's bicycle 2 is preferably elevated and unable to engage the ground so that the rider (not shown) of the adult bicycle 4 maintains steering control. Although not shown, the child can optionally pedal or coast while being towed. Connection between receiver member 20, or pivot receiver 30, and coupler member 22 is rapidly made. Coupler member 22 is first attached to the distal end of tow bar 24, while receiver member 20 or pivot receiver 30 is connected to the head tube 13 of the child's bicycle 2. The optional coupler ear 23 on the bottom portion of coupler 22, when present, is then aligned with the optional receiver ear 21 on the bottom portion of either receiver member 20 or pivot receiver 30 for male/female connection, with the front wheel 6 of the child's bicycle 2 concurrently being placed into a longitudinal orientation required for the hole 16 in the front surface of steering fork tube 15 on the child's bicycle 2 to become aligned with hole 14 in head tube 13, hole 18 in handlebar stem tube 17, and the interior end of the steering lock pin 10 exposed through the front surface of receiver member 20 or pivot receiver 30. Particularly when optional ears 21 and 23 and optional safety pin holes 26 and 27 are used, the upper portion of coupler member 22 is then rotated rearwardly toward receiver member 20 or pivot receiver 30 using joined ears 21 and 23 as a pivot point, until coupler member 22 is in full contact with receiver member 20 or pivot receiver 30 and opposing transversely positioned safety pin holes 27 in coupler member 22 become aligned with corresponding transversely positioned safety pin holes 26 in either receiver member 20 or pivot receiver 30. Once coupler member 22 achieves its position of full engagement with receiver member 20 or pivot receiver 30, the interior end of steering lock pin 10 is fully forced through the previously aligned head tube steering lock pin hole 14, steering fork tube hole 16, and handlebar stem tube hole 18. Then, to further secure coupler member 22 against receiver member 20 or pivot receiver 30 while adult bicycle 4 tows child's bicycle 2, a quick-release safety pin 25 can be inserted through opposing safety pin holes 26 in either receiver member 20 or pivot receiver 30, as well as opposing safety pin holes 27 in coupler member 22, even though quick-release safety pin 25 is not required to force the hidden end of steering lock pin 10 into head tube steering lock pin hole 14, steering fork tube hole 16, and handlebar stem tube hole 18 in the child's bicycle 2. Thus, the present invention allows child's bicycle 2 to be operated as an independent unit, and when a child (not shown) cycling with an adult becomes tired, child's bicycle 2 can be promptly attached without tools, and without any parts being removed therefrom, to adult bicycle 4 for tandem use as long as needed, and then readily disconnected with minimal effort thereafter to restore child's bicycle 2 into its independently operable condition. After release of child's bicycle 2 from adult bicycle 4 and if required, bicycle tow bar 24 can be again secured against adult bicycle 4 in an out-of-the-way position. Pivot receiver 30 allows prompt and easy adjustment of the angle of the child's bicycle 2 relative to the adult bicycle 4 while in tandem connection. However, although not as promptly accomplished and not shown in Figs. 1-12, angle adjustment of a child's bicycle 2 relative to an adult bicycle 4 while in tandem connection can still be achieved with receiver member 20 through the use of shims.

Fig. 1 shows the receiver member 20 in a first preferred embodiment of the present invention attached to the head tube 13 of a child's bicycle 2. Three out of four fastener connections 35 are shown securing receiver member 20 to the vertically extending head tube 13 on the child's bicycle 2. Receiver member 20 has a substantially U-shaped configuration, which is flanged to provide an attachment surface through which fastener connection 35 can be secured. Fig. 1 also shows an ear 21 protruding outwardly from the bottom front portion of receiver member 20. Although not shown and not critical to the present invention, it is preferred that a similar ear 21 would be formed into the hidden side of receiver member 20. Fig. 1 further shows one quick-release safety pin hole 26 transversely through the central portion of receiver member 20. Although not shown, it is contemplated for an opposing quick-release safety pin hole 26 to be transversely formed through the hidden side of receiver member 20. Both quick-release safety pin holes 26, when optionally used, would be configured slightly larger than the diameter dimension of the quick-release safety pin 25 intended for use therewith so that prompt and easy insertion, and removal, of quick-release safety pin 25 can occur. However, quick-release safety pin holes 26 would not be so large as to allow a lot of lateral movement of quick-release safety pin 25 while in its operational position. In addition, Fig. 1 shows handlebar stem tube 17 being positioned concentric within steering fork tube 15, and steering fork tube 15 concentrically positioned within head tube 13. Although the exposed end of steering lock pin 10 extends beyond the exposed front surface of receiver member 20 in an unlocked position, Fig. 1 shows handlebar stem tube 17 in an aligned position ready for locking by the coupler member 22 shown in Fig. 2. It is contemplated for receiver member 20 to be made from strong, durable, and weatherproof materials for long lasting use, such as but not limited to high-strength steel. The length dimension, diameter dimension, and configuration of steering lock pin 10 are not critical. However, the size and configuration of steering lock pin 10 should be appropriate to cost efficient manufacture and use.

Fig. 2 shows a coupler member 22 depending from the distal end of a bicycle tow bar 24 and being connected to the receiver member 20 in the first preferred embodiment of the present invention, and further being secured to receiver member 20 with a quick-release safety pin 25. For tandem connection of the child's bicycle 2 to an adult bicycle 4, as shown in Fig. 4, and although not critical, it is preferred for bicycle tow bar 24 to be telescoping or otherwise extendable, and for its proximal end to be connected to adult bicycle 4 in an out-of-the-way position. Receiver member 20 is attached to the vertically extending head tube 13 of a child's bicycle 2, within which steering fork tube 15 and handlebar stem tube 17 are concentrically positioned. Quick-release safety pin 25 further secures coupler member 22 in a fixed position relative to receiver member 20, although its use is not required for locking connection of receiver member 20 and coupler member 22, or fixed positioning of head tube 13, steering fork tube 15, and handlebar stem tube 17 relative to one another. The configuration of quick-release safety pin 25 is not critical, as long as it can be easy grasped by a human adult hand for prompt insertion and withdrawal from quick-release safety pin holes 26 and 27. Also, although the number of quick-release safety pins 25 used is not critical, for simplicity and cost efficient design, one quick-release safety pin 25 is preferred. Fig. 2 also shows three out of four fastener connections 35 used to secure receiver member 20 to head tube 13, which remain exposed when coupler member 22 is in its fully engaged position against receiver member 20. Coupler member 22 has a substantially U-shaped and non-flanged configuration, as opposed to the U-shaped and flanged configuration of receiver member 20. Fig. 2 also shows optional ear 23 protruding outwardly from the bottom front portion of coupler member 20. Although not shown and not critical, it is preferred that a similar ear 23 would be formed into the hidden side of coupler member 20. The presence of a second ear 23 on the hidden side of coupler member 22, would be determined by the existence of a second ear 21 on receiver member 20, with the number and configuration of ears 23 closely approximating that of ears 21, so that ears 21 and 23 can together act as a guide for prompt alignment of coupler member 22 into its fully engaged position against the vertically extending front surface of receiver member 20. In such a fully engaged position, coupler member 22 would push on the exposed end of steering lock pin 10 and cause the opposing interior end of steering lock pin 10 to become successively inserted through aligned holes (not shown in Fig. 2) in the front surfaces of concentrically positioned head tube 13, steering fork tube 15, and handlebar stem tube 17. Fig. 2 also shows handlebar stem tube 17 in its aligned position ready for locking by coupler member 22 and steering lock pin 10.

Fig. 3 shows a child's bicycle 2 outfitted with receiver member 20 of the first preferred embodiment of the present invention. Receiver member 20 is attached to the exposed front surface of head tube 13 and shown in its unlocked position with steering lock pin 10 extending beyond the front surface of head tube 13. Handlebar steering tube 17 is secured within steering fork tube 15 with handlebar stem lock bolt 19, and prior to connection of coupler member 22 to receiver member 20 handlebar steering tube 17 must be positioned in an orientation that causes the front wheel 6 of child's bicycle 2 to be longitudinally directed. Fig. 3 also shows receiver member 20 having an optional quick-release safety pin hole 26 and an optional receiver ear 21, with ear 21 assisting in fast engagement of coupler member 22 to receiver member 20 and safety pin hole 26 providing a further means for securing coupler member 22 to receiver member 20 once they are engaged. Although a second receiver ear 21 is not critical, it is preferred that the present invention have opposing quick-release safety pin holes 26, as well as opposing receiver ears 21.

Fig. 4 shows the first preferred embodiment of the present invention being used with the distal end of a bicycle tow bar 24 to safely tow a child's bicycle 2 in tandem behind an adult bicycle 4, with the front wheel 6 of the child's bicycle 2 being slightly elevated and an optional quick-release safety pin 25 in its operational position. Bicycle tow bar 24 can be fixed in length, foldable, telescoping, or otherwise extendable, as long as it becomes fixed in length during tandem use between child's bicycle and adult bicycle 4. When separated from child's bicycle 2, bicycle tow bar 24 can be returned to its stored position on adult bicycle 4. Since coupler member 22 is in its engaged position against receiver member 20, only coupler member 22 with its coupler ear 23 is visible to a viewer. Fig. 4 also shows optional quick-release safety pin 25 connected transversely through the central portion of coupler member 22. Fastener connections 35 hold receiver member 20 tight against the vertically extending exposed front surface of head tube 13 on child's bicycle 2, although receiver member 20 is difficult to distinguish in Fig. 4 due to its relatively small size and thin width dimension. Fig. 4 further shows handlebar stem lock bolt 19 secured to the top end of handlebar stem tube 17, as well as handlebar stem tube 17 and steering fork tube 15 both extending beyond opposite ends of the vertically oriented head tube 13. For connection of coupler member 22 and receiver member 20, handlebar stem tube 17 must be in a position allowing longitudinal orientation of front wheel 6 on child's bicycle 2.

Figs. 6-8 show coupler member 22 being progressively attached to receiver member 20 attached to the head tube 13 of a child's bicycle 2, and being in an unlocked position with one end of its steering lock pin 10 extending beyond the exposed front surface of receiver member 20, ready for engagement with coupler member 22. Figs. 6-8 show coupler member 20 depending from the distal end of bicycle tow bar 24 and in various stages of engagement with receiver member 20. Fig. 6 shows coupler member 22 partially engaged with receiver member 20, with the quick-release safety pin hole 27 of coupler member 22 and the quick-release safety pin hole 26 of receiver member 20 not yet being aligned, prior to the forward rotation of the upper end of coupler member 22 toward receiver member 20 that would cause engagement of coupler member 22 with the exposed end of steering lock pin 10 and result in the insertion of the interior end of steering lock pin 10 through head tube steering lock pin hole 14, steering fork tube hole 16, and optionally handlebar stem tube hole 18. Fig. 7 shows coupler member 22 further engaged with receiver member 20, with the quick-release safety pin hole 27 of coupler member 22 no longer visible, and preliminary engagement of the upper end of coupler member 22 with the exposed end of steering lock pin 10. Fig. 8 shows coupler member 22 fully engaged with receiver member 20 and the interior end of steering lock pin 10 being inserted through steering fork tube hole 16. Figs. 5-8 each show handlebar stem tube 17 concentrically secured within steering fork tube 15 by handlebar stem lock bolt 19, as well as head tube 13 concentrically positioned around steering fork tube 15. The inner end of steering lock pin 10 is inserted through head tube steering lock pin hole 14 and poised for insertion through steering fork tube hole 16 in steering fork tube 15, and the aligned handlebar stem tube hole 18 in handlebar stem tube 17. Prior to locked engagement of coupler member 22 with receiver member 20, handlebar stem tube 17 must be purposefully aligned so that its handlebar stem tube hole 18 is in a proper orientation for insertion therethrough of the interior end of steering lock pin 10. In this aligned orientation, the position of the front wheel 6 of child's bicycle 2 would become longitudinally directed. Figs. 5-8 also show steering lock pin stop 11 and steering lock pin return spring 12, used to disengage the interior end of steering lock pin 10 from steering fork tube hole 16 and handlebar stem tube hole 18, after optional quick-release safety pin 25 is withdrawn from quick-release safety pin holes 26 and 27, allowing for separation of coupler member 22 from receiver member 20 when desired. Figs. 5-8 further show receiver member 20 having an optional ear 21 that assists in establishing a prompt between coupler member 22 and receiver member 20, and optional quick-release safety pin receiver hole 26 for use with the quick-release safety pin 25 (shown in Fig. 2) to further secure coupler member 22 against receiver member 20 once steering lock pin 10 has been inserted through steering fork tube hole 16 and handlebar stem tube hole 18. Since Figs. 5-8 are sectional views, they do not show coupler ear 23 being aligned with receiver ear 21, or the fastener connections 35 shown in Figs. 1 and 2 that are used to secure receiver member 20 to vertically extending head tube 13 on child's bicycle 2.

Figs. 9-12 shows a second preferred embodiment of the present invention having a pivot receiver 30 attached to the front surface of the head tube 13 of a child's bicycle 2 in place of receiver member 20, with one end of a steering lock pin 10 protruding through the exposed front surface of pivot receiver 30. Although not shown and not critical, pivot receiver 30 can be connected to head tube 13 through use of any type of mounting hardware that creates a single pivot point between them. Pivot receiver 30 allows for fast and easy vertical adjustment of the raised position for the front wheel 6 on child's bicycle 2 while it is being towed by adult bicycle 4. Vertical adjustment of front wheel 6 with receiver member 20 is also possible, but would require the use of shims (not shown). Vertical adjustment is typically performed on an infrequent basis, such as to provide adaptation for a new child's bicycle, a new child, or the existing child after significant growth. Figs. 9 and 10 show the second preferred embodiment of the present invention having the front surface of pivot receiver 30 aligned parallel with the exposed front surface of head tube 13 of child's bicycle 2. In contrast, Fig. 11 shows the front surface of pivot receiver 30 attached to head tube 13 of child's bicycle 2 in a non-parallel, upwardly oriented position, and Fig. 12 shows the second preferred embodiment of the present invention with the front surface of pivot receiver 30 attached to head tube 13 of child's bicycle 2 in a non-parallel, downwardly oriented position. Fig. 9 further shows handlebar stem tube 17 concentrically positioned within steering fork tube 15, and head tube 13 concentrically positioned around steering fork tube 15. Figs. 9-12 also show pivot receiver 30 having an optional receiver ear 21 for easy alignment of the bottom portion of coupler member 22, and an optional quick-release safety pin hole 26 transversely through the central portion of pivot receiver 30 below steering lock pin 10 for use with a quick-release safety pin 25 for further securing the connection between coupler member 22 and pivot receiver 30 while child's bicycle 2 is being towed. Figs. 9-12 further show the central portion of pivot receiver 30 being secured to head tube 13 with a fixed pivot bolt 31 and the lower portion of pivot receiver 30 being secured to head tube 13 with a slide pivot bolt 32. What remains hidden in Figs. 9-12 is the mounting bracket permanently attached to head tube 13 that provides the connection between pivot receiver 30 and head tube 13. The mounting bracket can have any convenient configuration that provides a secure connection between pivot receiver 30 and head tube 13, and is preferably welded to the front surface of head tube 13. Figs. 10-12 also show steering lock pin 10 being connected to return spring 12 and the interior end of steering lock pin 10 being inserted through head tube steering lock pin hole 14, fixed pivot bolt 31 being connected to fixed pivot mount 33 and slide pivot bolt 32 being connected to slide pivot mount 34, with Fig. 10 showing slide pivot bolt 33 centered within slide pivot mount 34, Fig. 11 showing slide pivot bolt 33 within the front portion of slide pivot mount 34 whereby the front wheel 6 of child's bicycle 2 would be in a position of near maximum elevation while being towed, and Fig. 12 showing slide pivot bolt 33 within the rear portion of slide pivot mount 34 whereby the front wheel 6 of child's bicycle 2 would be in a position of near minimum elevation while being towed.

### INDUSTRIAL APPLICABILITY

Families with children ages 4-7 are often left without adequate means for cycling together. Children this age are typically too large for riding in an infant seat connected to an adult bicycle, and yet they generally do not possess the stamina and endurance to travel as far or as fast as an accompanying adult. To solve this problem, bicycle tow bars have been developed that attach a child's bicycle in tandem behind an adult bicycle. The steering lock of the present invention improves the means of connection between the distal end of a bicycle tow bar and a child's bicycle by providing a connection that is accomplished in one quick and efficient step, with fewer parts, a simplified connection, no part being removed from the adult bicycle during connection, and a more solid locking system during tandem travel. Therefore, as a result of using the present invention, connection and disconnection of the child's bicycle can be efficiently accomplished multiple times on the same ride, and a child who is age 4-7 can enjoy some independence in riding his or her own bicycle. In the towed position, the front wheel of the child's bicycle can be elevated so that the adult rider retains steering control. Also, the child can optionally pedal or coast while being towed.

## Claims

1. A steering lock for cooperation with a head tube (13) of a child's bicycle (2) and a distal end of a bicycle tow bar (24), the bar being adapted for attachment to an adult bicycle (4), the steering lock allowing rapid connection and disconnection between the head tube (13) and the distal end of a bicycle tow bar (24), and safe towing of the child's bicycle (2) behind the adult bicycle (4) in a tandem configuration and elevated positioning of the front wheel of the child's bicycle (2) while it is being towed so that the rider of the adult bicycle (4) retains steering control, said steering lock comprises:
a coupler member (22) adapted for attachment to the distal end of a bicycle tow bar (24) which is adapted to be connected to the adult bicycle (4); and
a receiver member (20, 30) adapted for attachment to the head tube (13) of a child's bicycle (2) and close positioning against said coupler member (22), said receiver member (20, 30) also comprising a steering lock pin (10) adapted for insertion through aligned holes (14, 16) formed into the respective front surfaces of at least the head tube (13) and the steering fork tube (15) of the child's bicycle (2), to lock one to the other in fixed relation for tandem travel of the adult bicycle (4) and the child's bicycle (2),
**characterized in that** the steering lock pin (10) is adapted for longitudinal movement between locked and unlocked positions, said coupler member (22) is adapted to mate to said receiver member (20, 30) in said locked position, said coupler member (22) is configured to move said steering lock pin (10) at once, in one quick and efficient step, into said locked position, said steering lock pin (10) is adapted to promptly return into said unlocked position upon a deliberate separation of said coupler member (22) and said receiver member (20, 30) from one another so that the child's bicycle (2) is restored to independent operation.

2. The steering lock of claim 1,
**characterized by** at least one quick-release safety pin (25), and further **characterized by** said coupler member (22) and said receiver member (20, 30) each being adapted for receipt of said quick-release safety pin (25), so that when each said quick-release safety pin (25) is properly mated to said coupler member (22) and said receiver member (20, 30), said coupler member (22) is further secured against said receiver member (20, 30) during tandem travel.

3. The steering lock of claim 1 or 2,
**characterized by** said coupler member (22) and said receiver member (20, 30) each having at least one ear (21, 23) analogous to the other for male/female connection, with said ears (21, 23) being adapted for guiding alignment of said coupler member (22) against said receiver member (20, 30).

4. The steering lock of any of claim 1 to 3,
**characterized by** said coupler member (22) and said receiver member (20, 30) each having at least one correspondingly positioned safety pin hole (26, 27) transversely therethrough that is adapted for easy insertion, easy removal, and secure positioning of one said quick-release safety pin (25).

5. The steering lock of any of claim 1 to 4,
**characterized by** said receiver member (22) being connectable to the head tube(13) of a child's bicycle (2) with at least one fixed pivot bolt (31) and at least one slide pivot bolt (32).

6. The steering lock of any of claim 1 to 5,
**characterized by** said coupler member (22) being non-flanged and substantially U-shaped, and further **characterized by** said receiver member (20, 30) being flanged and substantially U-shaped.

7. The steering lock of any of c!aim 1 to 6,
**characterized by** a return spring (12) associated with said steering lock pin (10), the return spring (12) being adapted for biasing the steering lock pin (10) in the unlocked position and being adapted for returning said steering lock pin (10) to said unlocked position after that said coupler member (22) is drawn away from said receiver member (20, 30).

8. A system consisting of a bicycle tow bar (24), a child's bicycle (2), and a steering lock according to claim 1, wherein the steering lock is configured for connecting a head tube (13) of the child's bicycle (2) with the distal end of the bicycle tow bar (24), the tow bar being adapted for attachment to an adult bicycle (4), said steering lock comprises:
coupler means (22) adapted for attachment to the distal end of the bicycle tow bar (24);
receiver means (20, 30) adapted for attachment to the head tube (13) of the child's bicycle (2), said receiver means (20, 30) also being adapted for close positioning against said coupler means (22), said receiver means (20, 30) comprising a steering lock pin (10) adapted for insertion through aligned holes (14, 16) formed into the respective front surfaces of at least the head tube (13) and the steering fork tube (15) of the child's bicycle (2), to lock one to the other in fixed relation for tandem travel of the adult bicycle (4) and the child's bicycle (2),
**characterized in that** the steering lock pin (10) is adapted for longitudinal movement between locked and unlocked positions, said coupler means (22) is adapted to mate to said receiver means (20, 30) in said locked position, said coupler means (22) is configured to move said steering lock pin (10) at once into said locked position, said steering lock pin (10) is adapted to promptly return into said unlocked position upon a deliberate separation of said coupler means (22) and said receiver means (20, 30) from one another so that the child's bicycle (2) is restored to independent operation.

9. The system of claim 8,
**characterized by** said coupler means (22) and said receiver means (20, 30) each having at least one ear (21) analogous to the other (23) for male/female connection, with said ears (21, 23) adapted for guiding alignment of said coupler means (22) to said receiver means (20, 30).

10. The system of claim 8 or 9,
**characterized by** said coupler means (22) and said receiver means (20, 30) each having correspondingly positioned safety pin holes (26, 27) laterally therethrough that are adapted for easy insertion, easy removal, and secure positioning of a safety pin means (25) for additional security in maintaining said coupler means (22) against said receiver means (20, 30) during tandem travel.

11. The system of any of claim 8 to 10,
**characterized by** said receiver means (20, 30) further comprising at least one fixed pivot bolt (31) and at least one slide pivot bolt (32).

12. The system of any of claim 8 to 11,
**characterized by** said receiver means (20, 30) being selected from a group consisting of receiver members requiring shims for angle adjustment and pivot receivers (30).

13. The system of any of claim 8 to 12,
**characterized by** said coupler means (22) comprising a non-flanged and substantially U-shaped coupler member (22), and further **characterized by** said receiver means (20, 30) comprising a receiver member (20, 30) that is substantially U-shaped and flanged.

14. The system of any of claim 8 to 13,
**characterized by** a return spring (12) associated with said steering lock pin (10), the return spring (12) being adapted for biasing the steering lock pin (10) in the unlocked position and being adapted for returning said steering lock pin (10) to said unlocked position after that said coupler member (22) is drawn away from said receiver member (20, 30)

15. A method for rapidly connecting and disconnecting of a child's bicycle (2) from an adult bicycle (4) for alternating tandem and independent operation of the child's bicycle (2), said method comprises the steps of:
providing a child's bicycle (2) with a front wheel, said child's bicycle (2) also having a head tube (13) and a steering fork tube (15) each with a front surface with a hole (14, 16) through said front surface, an adult bicycle (4), a bicycle tow bar (24) with a distal end, and a steering lock with a coupler member (22) and a receiver member (20, 30) having a steering lock pin;
attaching said receiver member (20, 30) to said head tube (13) on said child's bicycle (2) so that said steering lock pin (10) protrudes from said receiver member (20, 30);
attaching said bicycle tow bar (24) to said adult bicycle (4);
connecting said coupler member (22) to said distal end of said bicycle tow bar (24);
aligning said holes (14, 16) in said head tube (13) and said steering fork tube (15) so as to place said front wheel of said child's bicycle (2) in longitudinally directed position; and
moving said coupler member (22) into a position closely against said receiver member (20, 30),
**characterized in that** said moving of said coupler member (22) into a position closely against said receiver member (20, 30) causes said steering lock pin (10) to become inserted through said holes (14, 16) in said head tube (13) and said steering fork tube (15) to lock one to the other in fixed relation for safe tandem travel of said child's bicycle (2) behind said adult bicycle (4) until said coupler member (22) is deliberately drawn away from said receiver member (20, 30) for restoration of said child's bicycle (2) to independent operation.

16. The method of claim 15
**characterized by** said coupler member (22) and said receiver member (20, 30) each having at least one ear (21, 23) analogous to the other that is adapted for male/female connection, with said ears (21, 23) adapted for guiding alignment of said coupler member (22) against said receiver member (20, 30), and further **characterized by** a step of using said ears (21, 23) to align bottom portions of said coupler member (22) and said receiver member (20, 30), and a step of using said ears (21, 23) as a pivot point for forward rotation of said coupler member (22) against said receiver member (20, 30).

17. The method of claim 15 or 16
**characterized by** said steering lock further comprising a quick-release safety pin (25), and said coupler member (22) and said receiver member (20, 30) each having correspondingly positioned safety pin holes (26, 27) transversely therethrough that are adapted for easy insertion, easy removal, and secure positioning of said quick-release safety pin (25).

18. The method of any of claim 15 to 17
**characterized by** a step of providing at least one fixed pivot bolt (31) and at least one slide pivot bolt (32), and a step of using each said fixed pivot bolt (31) and each said slide pivot bolt (32) to connect said receiver member (20, 30) to said head tube (13) of said child's bicycle (2).

19. The method of any of claim 15 to 18
**characterized by** said coupler member (22) and said receiver member (20, 30) both being substantially U-shaped, and further **characterized by** said receiver member (20, 30) also being flanged.

20. The method of any of claim 15 to 19
**characterized by** a return spring (12) associated with said steering lock pin (10), the return spring (12) biasing the steering lock pin (10) in the unlocked position and returning said steering lock pin (10) to said unlocked position after that said coupler member (22) is drawn away from said receiver member (20, 30).

## Patentansprüche

1. Lenkschloss für die Kooperation mit einem Kopfrohr (13) eines Kinderfahrrades (2) und einem distalen Ende einer Fahrradschleppstange (24), wobei die Stange für eine Anbringung an einem Erwachsenenfahrrad (4) ausgelegt ist, wobei das Lenkschloss ein schnelles Verbinden und Trennen zwischen dem Kopfrohr (13) und dem distalen Ende einer Fahrradschleppstange (24) erlaubt, sowie ein sicheres Schleppen des Kinderfahrrades (2) hinter dem Erwachsenenfahrrad (4) in einer Tandemkonfiguration und einer erhöhten Anordnung des Vorderrades des Kinderfahrrades (2), während dieses geschleppt wird, so dass der Fahrer des Erwachsenenfahrades (4) die Lenkkontrolle behält, wobei das Lenkschloss umfasst:
ein Kopplerelement (22), das für eine Anbringung am distalen Ende einer Fahrradschleppstange (24) ausgelegt ist, welche dafür ausgelegt ist, mit dem Erwachsenenfahrrad (4) verbunden zu werden; und
ein Aufnehmerelement (20, 30), das für eine Anbringung am Kopfrohr (13) eines Kinderfahrrades (2) und eine nahe Positionierung am Kopplerelement (22) ausgelegt ist, wobei das Aufnehmerelement (20, 30) ferner einen Lenkschlossstift (10) umfasst, der für ein Einsetzen durch ausgerichtete Löcher (14, 16), die in den jeweiligen Frontflächen wenigstes des Kopfrohres (13) und des Lenkgabelrohres (15) des Kinderfahrrades (2) ausgebildet sind, ausgelegt ist, um das eine mit dem anderen in einer feststehenden Beziehung für eine Tandemfahrt des Erwachsenenfahrrades (4) und des Kinderfahrrades (2) zu verriegeln,
**dadurch gekennzeichnet, dass** der Lenkschlossstift (10) für eine Längsbewegung zwischen verriegelten und entriegelten Positionen ausgelegt ist, wobei das Kopplerelement (22) dafür ausgelegt ist, mit dem Aufnehmerelement (20, 30) in der verriegelten Position zusammenzupassen, wobei das Kopplerelement (22) so konfiguriert ist, dass es den Lenkschlossstift (10) sofort in einem schnellen und effizienten Schritt in die verriegelte Position bewegt, wobei der Lenkschlossstift (10) dafür ausgelegt ist, dass er bei einer vorsätzlichen Trennung des Kopplerelements (22) und des Aufnehmerelements (20, 30) voneinander unverzüglich in die entriegelte Position zurückkehrt, so dass das Kinderfahrrad (2) in den unabhängigen Betrieb zurückversetzt wird.

2. Lenkschloss nach Anspruch 1,
**gekennzeichnet durch** wenigstens einen Schnelllösesicherheitsstift (25), und ferner **dadurch gekennzeichnet, dass** das Kopplerelement (22) und das Aufnehmerelement (20, 30) dafür ausgelegt sind, den Schnelllösesicherheitsstift (25) aufzunehmen, so dass dann, wenn der jeweilige Schnelllösesicherheitsstift (25) in geeigneter Weise mit dem Kopplerelement (22) und dem Aufnehmerelement (20, 30) zusammengebracht wird, das Kopplerelement (22) während der Tandemfahrt weiter am Aufnehmerelement (20, 30) gesichert ist.

3. Lenkschloss nach Anspruch 1 oder 2,
**dadurch gekennzeichnet, dass** das Kopplerelement (22) und das Aufnehmerelement (20, 30) jeweils wenigstens eine Lasche (21, 23) analog zu der anderen für eine Stecker/Buchse-Verbindung aufweisen, wobei die Laschen (21, 23) für eine Führungsausrichtung des Kopplerelements (22) am Aufnehmerelement (20, 30) ausgelegt sind.

4. Lenkschloss nach irgendeinem der Ansprüche 1 bis 3,
**dadurch gekennzeichnet, dass** das Kopplerelement (22) und das Aufnehmerelement (20, 30) jeweils wenigstens ein entsprechend positioniertes Sicherheitsstiftloch (26, 27) transversal durch diese aufweisen, das für ein leichtes Aufnehmen, ein leichtes Entnehmen und ein sicheres Positionieren eines der Schnelllösesicherheitsstifte (25) ausgelegt ist.

5. Lenkschloss nach irgendeinem der Ansprüche 1 bis 4,
**dadurch gekennzeichnet, dass** das Aufnehmerelement (22) mit dem Kopfrohr (13) eines Kinderfahrrades (2) mittels wenigstens eines feststehenden Gelenkbolzens (31) und wenigstens eines gleitenden Gelenkbolzens (32) verbindbar ist.

6. Lenkschloss nach irgendeinem der Ansprüche 1 bis 5,
**dadurch gekennzeichnet, dass** das Kopplerelement (22) ungeflanscht und im Wesentlichen U-förmig ist, und ferner **dadurch gekennzeichnet, dass** das Aufnehmerelement (20, 30) geflanscht und im Wesentlichen U-förmig ist.

7. Lenkschloss nach irgendeinem der Ansprüche 1 bis 6,
**gekennzeichnet durch** eine Rückholfeder (12), die dem Lenkschlossstift (10) zugeordnet ist, wobei die Rückhohlfeder (12) dafür ausgelegt ist, den Lenkschlossstift (10) in die entriegelte Position vorzubelasten, und dafür ausgelegt ist, den Lenkschlossstift (10) in die entriegelte Position zurückzuholen, nachdem das Kopplerelement (22) vom Aufnehmerelement (20, 30) weggezogen worden ist.

8. System, bestehend aus einer Fahrradschleppstange (24), einem Kinderfahrrad (2) und einem Lenkschloss nach Anspruch 1, wobei das Lenkschloss dafür konfiguriert ist, ein Kopfrohr (13) des Kinderfahrrades (2) mit dem distalen Ende der Fahrradschleppstange (24) zu verbinden, wobei die Schleppstange für eine Anbringung an einem Erwachsenenfahrrad (4) ausgelegt ist, und wobei das Lenkschloss umfasst:
ein Kopplermittel (22), das für eine Anbringung am distalen Ende der Fahrradsteppstange (24) ausgelegt ist (24);
ein Aufnehmermittel (20, 30), das für eine Anbringung am Kopfrohr (13) des Kinderfahrrades (2) ausgelegt ist, wobei das Aufnehmermittel (20, 30) ferner für eine nahe Positionierung am Kopplermittel (22) ausgelegt ist, wobei das Aufnehmermittel (20, 30) einen Lenkschlossstift (10) umfasst, der für ein Einsetzen durch ausgerichtete Löcher (14, 16), die in den jeweiligen Frontflächen wenigstens des Kopfrohres (13) und des Lenkgabelrohres (15) des Kinderfahrrades (2) ausgebildet sind, ausgelegt ist, um das eine am anderen in einer feststehenden Beziehung für eine Tandemfahrt des Erwachsenenfahrrades (4) und des Kinderfahrrades (2) zu verriegeln,
**dadurch gekennzeichnet, dass** der Lenkschlossstift (10) für eine Längsbewegung zwischen verriegelten und entriegelten Positionen ausgelegt ist, wobei das Kopplermittel (22) dafür ausgelegt ist, mit dem Aufnehmermittel (20, 30) in der verriegelten Position zusammenzupassen, wobei das Kopplermittel (22) so konfiguriert ist, dass es den Lenkschlossstift (10) sofort in eine verriegelte Position bewegt, wobei der Lenkschlossstift (10) dafür ausgelegt ist, bei einer vorsätzlichen Trennung des Kopplermittels (22) und des Aufnehmermittels (20, 30) voneinander unverzüglich in die entriegelte Position zurückzukehren, so dass das Kinderfahrrad (2) in den unabhängigen Betrieb zurückversetzt wird.

9. System nach Anspruch 8,
**dadurch gekennzeichnet, dass** das Kopplermittel (22) und das Aufnehmermittel (20, 30) jeweils wenigstens eine Lasche (21) analog zu der anderen (23) für eine Stecker/Buchse-Verbindung aufweisen, wobei die Laschen (21, 23) für eine Führungsausrichtung des Kopplermittels (22) am Aufnehmermittel (20, 30) ausgelegt sind.

10. System nach Anspruch 8 oder 9,
**dadurch gekennzeichnet, dass** das Kopplermittel (22) und das Aufnehmermittel (20, 30) jeweils entsprechend positionierte Sicherheitsstiftlöcher (26, 27) lateral durch diese aufweisen, die für ein einfaches Einführen, ein einfaches Entfernen und ein sicheres Positionieren eines Sicherheitsstiftmittels (25) für eine zusätzliche Sicherheit beim Halten des Kopplermittels (22) gegen das Aufnehmermittel (20, 30) während der Tandemfahrt ausgelegt sind.

11. System nach irgendeinem der Ansprüche 8 bis 10,
**dadurch gekennzeichnet, dass** das Aufnehmermittel (20, 30) ferner wenigstens einen feststehenden Gelenkbolzen (31) und wenigstens einen gleitenden Gelenkbolzen (32) umfasst.

12. System nach irgendeinem der Ansprüche 8 bis 11,
**dadurch gekennzeichnet, dass** das Aufnehmermittel (20, 30) aus einer Gruppe ausgewählt ist, die Aufnehmerelemente umfasst, die Abstandsstücke für eine Winkeleinstellung und Gelenkaufnehmer (30) umfasst.

13. System nach irgendeinem der Ansprüche 8 bis 12,
**dadurch gekennzeichnet, dass** das Kopplermittel (22) ein ungeflanschtes und im Wesentlichen U-förmiges Kopplerelement (22) umfasst, und ferner **dadurch gekennzeichnet, dass** das Aufnehmermittel (20, 30) ein Aufnehmermittel (20, 30) umfasst, dass im Wesentlichen U-förmig und geflanscht ist.

14. System nach irgendeinem der Ansprüche 8 bis 13,
**gekennzeichnet durch** eine Rückholfeder (12), die dem Lenkschlossstift (10) zugeordnet ist, wobei die Rückholfeder (12) dafür ausgelegt ist, den Lenkschlossstift (10) in die entriegelte Position vorzubelasten, und dafür ausgelegt ist, den Lenkschlossstift (10) in die entriegelte Position zurückzuholen, nachdem das Kopplerelement (22) vom Aufnehmerelement (20, 30) weggezogen worden ist.

15. Verfahren zum schnellen Verbinden und Trennen eines Kinderfahrrades (2) und eines Erwachsenenfahrrades (4) zum abwechselnden tandemartigen und unabhängigen Betrieb des Kinderfahrrades (2), wobei das Verfahren die Schritte umfasst:
Bereitstellen eines Kinderfahrrades (2) mit einem Vorderrad, wobei das Kinderfahrrad (2) ferner ein Kopfrohr (13) und ein Lenkgabelrohr (15) jeweils mit einer Frontfläche mit einer Bohrung (14, 16) durch die Frontfläche aufweist, eines Erwachsenenfahrrades (4), einer Fahrradschleppstange (24) mit einem distalen Ende, und eines Lenkschlosses mit einem Kopplerelement (22) und einem Aufnehmerelement (20, 30), das einen Lenkschlossstift aufweist;
Anbringen des Aufnehmerelements (20, 30) am Kopfrohr (13) am Kinderfahrrad (2), so dass der Lenkschlossstift (10) aus dem Aufnehmerelement (20, 30) hervorsteht;
Anbringen der Fahrradschleppstange (24) am Erwachsenenfahrrad (4);
Verbinden des Kopplerelements (22) mit dem distalen Ende der Fahrradschleppstange (24);
Ausrichten der Löcher (14, 16) im Kopfrohr (13) und im Lenkgabelrohr (15), um somit das Vorderrad des Kinderfahrrades (2) in longitudinal ausgerichteter Stellung anzuordnen; und
Bewegen des Kopplerelements (22) in eine Position dicht am Aufnehmerelement (20, 30),
**dadurch gekennzeichnet, dass** das Bewegen des Kopplerelements (22) in eine Position dicht am Aufnehmerelment (20, 30) den Lenkschlossstift (10) veranlasst, in die Löcher (14, 16) im Kopfrohr (13) und im Lenkgabelrohr (15) eingeführt zu werden, um das eine mit dem anderen in einer feststehenden Beziehung für eine sichere Tandemfahrt des Kinderfahrrades (2) hinter dem Erwachsenenfahrrad (4) zu verriegeln, bis das Kopplerelement (22) vorsätzlich vom Aufnehmerelement (20, 30) weggezogen wird, um den unabhängigen Betrieb des Kinderfahrrades (2) wiederherzustellen.

16. Verfahren nach Anspruch 15,
**dadurch gekennzeichnet, dass** das Kopplerelement (22) und das Aufnehmerelement (20, 30) jeweils wenigstens eine Lasche (21, 23) analog zu der anderen aufweisen, die für eine Stecker/Buchse-Verbindung ausgelegt sind, wobei die Laschen (21, 23) für eine Führungsausrichtung des Kopplerelements (22) am Aufnehmerelement (20, 30) ausgelegt sind, und ferner **gekennzeichnet durch** einen Schritt der Verwendung der Laschen (21, 23) zum Ausrichten der Bodenabschnitte des Kopplerelements (22) und des Aufnehmerelements (20, 30), und einen Schritt der Verwendung der Laschen (21, 23) als Gelenkpunkt für eine Vorwärtsdrehung des Kopplerelements (22) gegen das Aufnehmerelement (20, 30).

17. Verfahren nach Anspruch 15 oder 16
**dadurch gekennzeichnet, dass** das Lenkschloss ferner einen Schnelllösesicherheitsstift (25) umfasst, wobei das Kopplerelement (22) und das Aufnehmerelement (20, 30) jeweils entsprechend angeordnete Sicherheitsstiftlöcher (26, 27) transversal durch diese aufweisen, die für ein einfaches Einführen, ein einfaches Entfernen und ein sicheres Positionieren des Schnelllösesicherheitsstifts (25) ausgelegt sind.

18. Verfahren nach irgendeinem der Ansprüche 15 bis 17,
**gekennzeichnet durch** einen Schritt des Bereitstellens wenigstens eines feststehenden Gelenkbolzens (31) und wenigstens eines gleitenden Gelenkbolzens (32), und einen Schritt der Verwendung jeweils des feststehenden Gelenkbolzens (31) und jeweils des gleitenden Gelenkbolzens (32) zum Verbinden des Aufnehmerelements (20, 30) mit dem Kopfrohr (13) des Kinderfahrrades (2).

19. Verfahren nach irgendeinem der Ansprüche 15 bis 18,
**dadurch gekennzeichnet, dass** das Kopplerelement (22) und das Aufnehmerelement (20, 30) beide im Wesentlichen U-förmig sind, und ferner **dadurch gekennzeichnet, dass** das Aufnehmerelment (20, 30) auch geflanscht ist.

20. Verfahren nach irgendeinem der Ansprüche 15 bis 19,
**dadurch gekennzeichnet, dass** eine Rückholfeder (12) dem Lenkschlossstift (10) zugeordnet ist, wobei die Rückholfeder (12) den Lenkschlossstift (10) in die entriegelte Position vorbelastet und den Lenkschlossstift (10) in die entriegelte Position zurückholt, nachdem das Kopplerelement (22) vom Aufnehmerelement (20, 30) weggezogen worden ist.

## Revendications

1. Verrou de direction pour coopérer avec un plongeur-potence (13) d'une bicyclette (2) d'enfant et avec une extrémité distale d'une barre (24) de remorquage d'une bicyclette, la barre étant conçue pour être fixée à une bicyclette (4) d'adulte, le verrou de direction permettant une connexion et une déconnexion rapide entre le plongeur-potence (13) et l'extrémité distale d'une barre (24) de remorquage d'une bicyclette et un remorquage sur de la bicyclette (2) d'enfant derrière la bicyclette (4) d'adulte suivant une configuration en tandem et une mise en position surélevée de la roue avant de la bicyclette (2) d'enfant, alors qu'elle est remorquée, de sorte que le cycliste de la bicyclette (4) d'adulte conserve la commande de la direction, le verrou de direction comprenant :
un coupleur (22) conçu pour être fixé à l'extrémité distale d'une barre (24) de remorquage de bicyclette qui est conçue pour être reliée à la bicyclette (4) d'adulte ; et
un récepteur (20, 30) conçu pour être fixé au plongeur-potence (13) d'une bicyclette (2) d'enfant et pour se mettre en position tout près du coupleur (22), le récepteur (20, 30) comprenant aussi une broche (10) de verrou de direction destinée à être insérée dans des trous (14, 16) alignés formés dans les surfaces avant respectives d'au moins le plongeur-potence (13) et le tube (15) de direction en fourche de la bicyclette (2) d'enfant, pour les verrouiller l'un à l'autre en une relation fixée pour un trajet en tandem de la bicyclette (4) d'adulte et de la bicyclette (2) d'enfant,
**caractérisé en ce que** la broche (10) du verrou de direction est conçue pour se déplacer longitudinalement entre des positions verrouillée et déverrouillée, le coupleur (22) est conçu pour coopérer avec le récepteur (20, 30) dans la position verrouillée, le coupleur (22) est configuré pour mettre la broche (10) du verrou de direction d'un coup, en une opération rapide et efficace, en la position verrouillée, la broche (10) de verrou de direction étant conçue pour revenir rapidement à la position déverrouillée après une séparation délibérée du coupleur (22) et du récepteur (20, 30) l'un de l'autre de sorte que la bicyclette (2) d'enfant reprend son fonctionnement indépendant.

2. Verrou de direction suivant la revendication 1,
**caractérisé par** une au moins une broche (25) de sécurité à déclenchement instantanée de sorte que, lorsque chaque broche (25) de sécurité à déclenchement instantanée est associée correctement au coupleur (22) et au récepteur (20, 30), le coupleur (22) est assujetti en outre au récepteur (20, 30) pendant le trajet en tandem.

3. Verrou de direction suivant la revendication 1 ou 2,
**caractérisé en ce que** le coupleur (22) et le récepteur (20, 30) ont chacun une oreille (21, 23) analogue à l'autre pour une connexion mâle/femelle, les oreilles (21, 23) étant conçues pour un alignement de guidage du coupleur (22) sur le récepteur (20, 30).

4. Verrou de direction suivant l'une quelconques des revendications 1 à 3,
**caractérisé en ce que** le coupleur (22) et le récepteur (20, 30) ont chacun au moins un trou (26, 27) de cheville de sécurité, placé de manière correspondante, qui les traverse transversalement et qui est conçu pour une insertion aisée et un retrait facile et pour assurer la mise en position d'une broche (25) de sécurité à déclenchement instantané.

5. Verrou de direction suivant l'une quelconques des revendications 1 à 4,
**caractérisé en ce que** le récepteur (22) peut être connecté au plongeur-potence (13) d'une bicyclette (2) d'enfant par au moins un axe (31) fixe de pivot et par au moins un axe (32) coulissant de pivot.

6. Verrou de direction suivant l'une quelconques des revendications 1 à 5,
**caractérisé en ce que** le coupleur (22) n'est pas bridé et est sensiblement en forme de U, **caractérisé en outre en ce que** le récepteur (20,30) est bridé et est sensiblement en forme de U.

7. Verrou de direction suivant l'une quelconques des revendications 1 à 6,
**caractérisé par** un ressort (12) de rappel associé à la broche (10) de verrou de direction, le ressort (12) de rappel étant conçu pour mettre la broche (10) de verrou de direction dans la position déverrouillée après que le coupleur (22) est éloigné du récepteur (20, 30).

8. Système consistant en une barre (24) de remorquage d'une bicyclette, en une bicyclette (2) d'enfant et en un verrou de direction suivant la revendication 1, dans lequel le verrou de direction est configuré pour relier un plongeur-potence (13) de la bicyclette (2) d'enfant à l'extrémité distale de la barre (24) de remorquage d'une bicyclette, la barre de remorquage étant conçue pour être fixée à une bicyclette (4) d'adulte, le verrou de direction comprenant :
un coupleur (22) conçu pour être fixé à l'extrémité distale d'une barre (24) de remorquage de bicyclette, qui est conçue pour être reliée à la bicyclette (4) d'adulte ; et
un récepteur (20, 30) conçu pour être fixé au plongeur-potence (13) d'une bicyclette (2) d'enfant et pour se mettre en position tout près du coupleur (22), le récepteur (20, 30) comprenant aussi une broche (10) de verrou de direction destinée à être insérée dans des trous (14, 16) alignés formés dans les surfaces avant respectives d'au moins le plongeur-potence (13) et le tube (15) de direction en fourche de la bicyclette (2) d'enfant pour les verrouiller l'un à l'autre en une relation fixée pour un trajet en tandem de la bicyclette (4) d'adulte et de la bicyclette (2) d'enfant,
**caractérisé en ce que** la broche (10) de verrou de direction est conçue pour se déplacer longitudinalement entre des positions verrouillée et déverrouillée, le coupleur (22) est conçu pour coopérer avec le récepteur (20, 30) dans la position verrouillée, le coupleur (22) est configuré pour mettre la broche (10) de verrou de direction d'un coup, en une opération rapide et efficace, en la position verrouillée, la broche (10) de verrou de direction étant conçue pour revenir rapidement à la position déverrouillée, après une séparation délibérée du coupleur (22) et du récepteur (20, 30), l'un de l'autre de sorte que la bicyclette (2) d'enfant reprend son fonctionnement indépendant.

9. Système suivant la revendication 8,
**caractérisé en ce que** le coupleur (22) et le récepteur (20, 30) ont chacun une oreille (21, 23) analogue à l'autre pour une connexion mâle/femelle, les oreilles (21, 23) étant conçues pour un alignement de guidage du coupleur (22) sur le récepteur (20, 30).

10. Système suivant la revendication 8 ou 9,
**caractérisé en ce que** le coupleur (22) et le récepteur (20, 30) ont chacun des trous (26, 27) de broche de sécurité, placés de manière correspondante et les traversant latéralement, qui sont conçus pour une insertion facile et un retrait facile et pour assurer une mise en position d'un moyen (25) à broche de sécurité pour une sécurité supplémentaire dans le maintien du coupleur (22) sur le récepteur (20, 30) pendant un trajet en tandem.

11. Système suivant l'une quelconque des revendications 8 à 10,
**caractérisé en ce que** le récepteur (20, 30) comprend en outre au moins un axe (31) fixe de pivot et au moins un axe (32) coulissant de pivot.

12. Système suivant l'une quelconque des revendications 8 à 11,
**caractérisé en ce que** le récepteur (20, 30) est choisi dans le groupe consistant en des récepteurs exigeant des cales d'ajustement angulaire et des récepteurs (30) à pivot.

13. Système suivant l'une quelconque des revendications 8 à 12,
**caractérisé en ce que** le coupleur (22) comprend un coupleur (22) non bridé et sensiblement en forme de U et **caractérisé en outre en ce que** le récepteur (20, 30) comprend un récepteur (20, 30) qui est sensiblement en forme de U et qui est bridé.

14. Système suivant l'une quelconque des revendications 8 à 13,
**caractérisé par** un ressort de rappel associé à la broche (10) de verrou de direction, le ressort (12) de rappel étant conçu pour mettre la broche (10) de verrou de direction dans la position déverrouillée et étant conçue pour ramener la broche (10) de verrou de direction dans la position déverrouillée après que le coupleur (22) est éloigné du récepteur (20, 30).

15. Procédé pour connecter et déconnecter rapidement un bicyclette (2) d'enfant d'une bicyclette (4) d'adulte pour que la bicyclette (2) d'enfant fonctionne en alternance en tandem et d'une manière indépendante, le procédé comprenant les stades dans lesquels :
on se procure une bicyclette (2) d'enfant ayant une roue avant, la bicyclette (2) d'enfant ayant aussi un plongeur-potence (13) et un tube (15) en fourche de direction, chacun ayant en surface avant avec un trou traversant cette surface avant, une bicyclette (4) d'adulte, une barre (24) de remorquage d'une bicyclette ayant une extrémité distale et un verrou de direction ayant un coupleur (22) et un récepteur (20, 30) ayant une broche de verrou de direction ;
on fixe le récepteur (20, 30) au plongeur-potence (13) sur la bicyclette (2) d'enfant de sorte que la broche (10) de verrou de direction face saillie de récepteur (20, 30) ;
on fixe la barre (24) de remorquage de bicyclette à la bicyclette (4) d'adulte ;
on relie le coupleur (22) à l'extrémité distale de la barre (24) de remorquage de bicyclette ;
on aligne les trous (14, 16) du plongeur-potence (13) et du tube (15) fourche de direction de manière à placer la roue avant de la bicyclette (2) d'enfant dans une position dirigée longitudinalement ; et
on met le coupleur (22) en une position toute proche du récepteur (20, 30),
**caractérisé en ce que** mettre le coupleur (22) en une position toute proche du récepteur (20, 30) fait que la broche (10) de verrou de direction s'insère dans les trous (14, 16) du plongeur-potence (13) et du tube (15) fourche de direction pour les verrouiller l'un à l'autre en une relation fixe pour un trajet en tandem de la bicyclette (2) d'enfant derrière la bicyclette (4) adulte jusqu'à ce que le coupleur (22) soit retiré délibérément du récepteur (20, 30) pour remettre la bicyclette (2) d'enfant en fonctionnement indépendant.

16. Procédé suivant la revendication 15,
**caractérisé en ce que** le coupleur (22) et le récepteur (20, 30) ont chacun au moins une oreille (21, 23) analogue à l'autre, qui est conçue pour une connexion mâle/femelle, les oreilles (21, 23) étant conçues pour un alignement de guidage du coupleur (22) sur le récepteur (20, 30), et **caractérisé en outre par** un stade dans lequel on utilise les oreilles (21, 23) pour aligner des parties de fond du coupleur (22) et du récepteur (20, 30) et un stade dans lequel on utilise les oreilles (21, 23) comme point de pivotement pour une rotation vers l'avant du coupleur (22) par rapport au récepteur (20, 30).

17. Procédé suivant la revendication 15 ou 16,
**caractérisé en ce que** le verrou de direction comprend en outre une broche (25) de sécurité à déclenchement instantanée et le coupleur (22) et le récepteur (20, 30) ont chacun des trous (26, 27) de broche de sécurité positionnés de manière correspondante, qui les traversent transversalement et qui sont conçus pour une insertion facile et un retrait facile et pour assurer une mise en position de la broche (25) de sécurité et à déclenchement instantané.

18. Procédé suivant l'une quelconque des revendications 15 à 17,
**caractérisé par** un stade dans lequel on prévoit au moins un axe (31) fixe de pivot et au moins un axe (32) coulissant de pivot et par un stade dans lequel on utilise chacun de l'axe (31) fixe de pivot et de l'axe (32) coulissant de pivot pour relier le récepteur (20, 30) au plongeur-potance (13) de la bicyclette (2) d'enfant.

19. Procédé suivant l'une quelconque des revendications 15 à 18,
**caractérisé en ce que** le coupleur (22) et le récepteur (20, 30) sont tous deux sensiblement en forme de U et **caractérisé en outre en ce que** le récepteur (20, 30) est aussi bridé.

20. Procédé suivant l'une quelconque des revendications 15 à 19,
**caractérisé par** un ressort de rappel associé à la broche (10) de verrou de direction, le ressort (12) de rappel étant conçu pour mettre la broche (10) de verrou de direction dans la position déverrouillée et pour ramener la broche (10) de verrou de direction dans la position déverrouillée après que le coupleur (22) est éloigné du récepteur (20, 30).
